# EUROPÄISCHE PATENTSCHRIFT

(11) **EP 3 999 469 B1**
(45) Veröffentlichungstag und Bekanntmachung des Hinweises auf die Patenterteilung: **30.08.2023**
(21) Anmeldenummer: 19742178.7
(22) Anmeldetag: 16.07.2019
(51) Int. Cl.: C01B 33/035, B01J 8/42, C01B 33/029, C01B 33/03

(54) **VERFAHREN ZUR HERSTELLUNG VON POLYKRISTALLINEM SILICIUM**
METHOD FOR PRODUCING POLYCRYSTALLINE SILICON
PROCÉDÉ DE PRODUCTION DE SILICIUM POLYCRISTALLIN

(43) Veröffentlichungstag der Anmeldung: 25.05.2022
(73) Patentinhaber: Wacker Chemie AG, 81737 München (DE)
(72) Erfinder: WOLFF, Jürgen, 01454 Radeberg (DE); WENZEIS, Markus, 84329 Wurmannsquick (DE)
(74) Vertreter: Belz, Ferdinand
(86) Internationale Anmeldenummer: PCT/EP2019/069110
(87) Internationale Veröffentlichungsnummer: WO 2021/008693

(56) Entgegenhaltungen:
- EP-A1- 2 719 663
- EP-A2- 2 266 923
- CN-B- 101 597 060

## Beschreibung

Die Erfindung betrifft ein Verfahren zur Herstellung von polykristallinem Silicium in einem Gasphasenabscheidungsreaktor, wobei zur Vermeidung von Staubabscheidungen mit zumindest einer Messvorrichtung die Trübung innerhalb des Reaktionsraums des Reaktors während der Abscheidung bestimmt wird.

Polykristallines Silicium (Polysilicium) dient als Ausgangsmaterial bei der Herstellung von einkristallinem (monokristallinem) Silicium, beispielsweise mittels Tiegelziehen (Czochralski- oder CZ-Verfahren) oder mittels Zonenschmelzen (Floatzone-Verfahren). Einkristallines Silicium wird in der Halbleiterindustrie zur Fertigung von elektronischen Bauelementen (Chips) verwendet.

Ferner wird Polysilicium zur Herstellung von multikristallinem Silicium, beispielsweise mittels Blockgussverfahren, benötigt. Das in Form eines Blocks erhaltene multikristalline Silicium kann zur Fertigung von Solarzellen eingesetzt werden.

Polysilicium kann beispielsweise durch das Siemens-Verfahren - ein chemischer Gasphasenabscheidungsprozess - gewonnen werden. Dabei werden in einem glockenförmigen Reaktor (Siemens-Reaktor) Trägerkörper (üblicherweise aus Polysilicium) durch direkten Stromdurchgang erhitzt und ein Reaktionsgas enthaltend eine siliciumhaltige Komponente und Wasserstoff eingeleitet. Die siliciumhaltige Komponente ist in der Regel Monosilan (SiH₄) oder ein Halogensilan der allgemeinen Zusammensetzung SiHₙX₄₋ₙ (n = 0, 1, 2, 3; X = Cl, Br, I) . Üblicherweise handelt es sich um ein Chlorsilan oder Chlorsilangemisch, für gewöhnlich um Trichlorsilan (SiHCl₃, TCS). Überwiegend wird SiH₄ oder TCS im Gemisch mit Wasserstoff eingesetzt. Der Aufbau eines typischen Siemens-Reaktors ist beispielsweise in der EP 2 077 252 A2 oder EP 2 444 373 A1 beschrieben. Der Boden des Reaktors (Bodenplatte) ist generell mit Elektroden versehen, welche die Trägerkörper aufnehmen. Bei den Trägerkörpern handelt es sich für gewöhnlich um Filamentstäbe (Dünnstäbe) aus Silicium. Üblicherweise werden zwei Filamentstäbe mit einer Brücke (aus Silicium) zu einem Stabpaar verbunden, das über die Elektroden einen Stromkreis bildet. Die Oberflächentemperatur der Filamentstäbe beträgt üblicherweise während der Abscheidung mehr als 1000°C. Bei diesen Temperaturen zersetzt sich die siliciumhaltige Komponente des Reaktionsgases und elementares Silicium scheidet sich aus der Gasphase als Polysilicium ab. Dadurch nimmt der Durchmesser der Filamentstäbe und der Brücke zu. Nach dem Erreichen eines vorgegebenen Durchmessers der Stäbe wird die Abscheidung üblicherweise gestoppt und die erhaltenen Polysiliciumstäbe ausgebaut. Nach dem Entfernen der Brücke werden annähernd zylinderförmige Siliciumstäbe erhalten.

Ferner kann Polysilicium in Form von Granulat in einem Wirbelschicht- bzw. Fließbettreaktor produziert werden. Dies geschieht durch Fluidisierung von Silicium-Keimpartikeln mittels einer Gasströmung in einer Wirbelschicht, wobei diese über eine Heizvorrichtung auf hohe Temperaturen aufgeheizt wird. Durch Zugabe eines siliciumhaltigen Reaktionsgases kommt es zu einer Abscheidereaktion an der heißen Partikeloberfläche, wobei sich elementares Silicium auf den Keimpartikeln abscheidet. Die Keimpartikel wachsen dadurch im Durchmesser an. Durch den regelmäßigen Abzug von angewachsenen Partikeln und Zugabe weiterer Silicium-Keimpartikel kann das Verfahren kontinuierlich betrieben werden. Als siliciumhaltiges Reaktionsgas können Silicium-Halogenverbindungen (z.B. Chlorsilane oder Bromsilane), Monosilan (SiH₄) und Mischungen dieser Gase mit Wasserstoff eingesetzt werden. Ein typischer Fließbettreaktor zur Herstellung von Polysilicium ist z.B. in der US4900411A beschrieben.

Bei der Abscheidung von Polysilicium, insbesondere beim Siemens-Verfahren, kann es aus diversen Gründen zu unerwünschten Staubabscheidungen kommen. Zu den Gründen zählen unter anderem: Reaktionsgas mit einem zu hohen Anteil an Halogensilan; Anstieg des Anteils an unerwünschten Silanen (z.B. Dichlorsilan); Auftreten lokaler Gastemperaturunterschiede im Reaktionsraum oder lokaler Temperaturunterschiede der Trägerkörper (insb. Oberflächentemperatur), in der Regel aufgrund sich ändernder Gasströmungen.

Generell befinden sich bei der Abscheidung von Polysilicium zwei konkurrierende Prozesse, nämlich die Siliciumablagerung an der Oberfläche von Stäben bzw. Siliciumgranulat und die Bildung von freien Partikeln (Staubabscheidung), im Gleichgewicht. Die gebildeten freien Partikel können sich in Abhängigkeit der Art des Reaktors und der Reaktionsbedingungen unterscheiden, wobei deren Zusammensetzung von reinem Silicium (amorph bis kristallin) bis hin zu komplexen Verbindungen der allgemeinen Formel SiₓCl_{y}H_{z} variieren kann.

Die durch Staubabscheidung entstandenen Partikel verteilen sich für gewöhnlich mit der Gasströmung im gesamten Reaktionsraum und setzen sich auf den Stäben bzw. dem Siliciumgranulat und insbesondere der inneren Reaktorwand ab. Die auf den Stäben oder dem Granulat abgelagerten Partikel können im Verlauf der weiteren Abscheidung ggf. von neu gebildeten Schichten überwachsen und so in das Polysiliciumprodukt integriert werden. Daher führen Staubabscheidungen in der Regel zu Produktabwertungen und Produktionsverlusten. Die an der Reaktorwand und insbesondere auch in den dem Reaktor nachgelagerten verfahrenstechnischen Ausrüstungen (z.B. Wärmetauscher, Filter) abgelagerten Partikel bilden mit der Zeit einen immer stärker werdenden Belag, der von Zeit zu Zeit entfernt werden muss. Dies erhöht die Zeit, in welcher der Reaktor stillsteht und verursacht höhere Produktionskosten. Gegebenenfalls ist eine Reinigung der inneren Reaktorwand sogar zwischen jedem Chargenwechsel erforderlich. Schäden durch Verblockungen und kurze Reinigungsintervalle können zu einem kostenintensiven Anlagenstillstand führen.

Aus EP 2 719 663 A1 ist ein Verfahren zur Herstellung von Polysilicium nach dem Siemens-Verfahren bekannt, bei dem vor Entnahme der Polysiliciumstäbe ein Reaktivgas in den Reaktor geleitet wird, um ungewollt abgeschiedene Siliciumpartikel aufzulösen.

EP2 266 923 A2 beschreibt ein Verfahren zur Herstellung von Polysiliciumgranulat, bei dem vor dem Verpacken des Granulats gegebenenfalls anhaftende Staubpartikel mittels Vakuum entfernt werden.

Zur Erkennung von Staubabscheiden werden bisher in regelmäßigen Abständen Sichtkontrollen an Schaugläsern in der Reaktorwand durchgeführt, wobei Staubabscheidungen mit dem bloßen Auge durch eine Trübung des Reaktionsraums erkannt werden sollen. Allerdings ist eine Staubabscheidung in der Regel nur im fortgeschrittenen Zustand zweifelsfrei zu erkennen, also zu einem Zeitpunkt, bei dem die Reinheit des Polysiliciumprodukts schon beeinträchtigt ist. Zudem ist eine nahtlose Überwachung mit einem hohen personellen Aufwand verbunden. Grundsätzlich werden Staubabscheidungen nicht rechtzeitig erkannt, so dass das Produkt abgewertet oder gar verworfen werden muss.

Aus CN 101597 060 B ist ein kameragestütztes Verfahren zur Bestimmung des Durchmessers von Polysiliciumstäben während des Siemens-Verfahrens bekannt.

Zwar kann das Risiko von Staubabscheidungen grundsätzlich durch eine optimierte Verfahrensführung minimiert werden, allerdings treten dennoch immer wieder Staubabscheidungen auf. Durch ein unmittelbares Anpassen von Prozessparametern, kann einer Staubabscheidung entgegengewirkt werden. Daher wäre es wünschenswert, Staubabscheidungen möglichst früh erkennen zu können. Der vorliegenden Erfindung lag daher die Aufgabe zugrunde, ein Verfahren bereitzustellen, das eine Erkennung von Staubabscheidungen bereits in ihrer Entstehung ermöglicht. Diese Aufgabe wird gelöst durch ein Verfahren zur Herstellung von polykristallinem Silicium, umfassend Einleiten eines Reaktionsgases, das neben Wasserstoff Silan und/oder zumindest ein Halogensilan enthält, in einen Reaktionsraum eines Gasphasenabscheidungsreaktors, wobei der Reaktionsraum mindestens einen erhitzten Trägerkörper umfasst, auf welchem durch Abscheidung Silicium unter Bildung des polykristallinen Siliciums abgeschieden wird. Zur frühzeitigen Erkennung von Staubabscheidungen wird dabei mit zumindest einer Messvorrichtung die Trübung innerhalb des Reaktionsraums während der Abscheidung bestimmt.

Zu Beginn einer Staubabscheidung entstehen Partikel mit einer mittleren Größe von etwa 100 nm. Bei einer fortgeschrittenen Staubabscheidung können diese Partikel eine mittlere Größe von etwa 10 µm aufweisen. Üblicherweise liegt die Partikelgröße bei Staubabscheidungen in einem Bereich von 100 nm und 10 µm. Diese Partikel absorbieren und streuen elektromagnetische Strahlung, insbesondere im sichtbaren und infraroten Bereich. Dabei ist es unerheblich, ob die Quelle der elektromagnetischen Strahlung der erhitzte Trägerköper selbst oder eine externe, also außerhalb des Reaktionsraums angeordnete Lichtquelle, ist. Die Erkennung der Trübung erfolgt grundsätzlich aufgrund einer zunehmenden Anzahl an Partikeln in der Gasatmosphäre im Reaktionsraum und einer damit einhergehenden Veränderung der durchtretenden elektromagnetischen Strahlung (z.B. Richtung, Streuung, Absorption, Intensität).

Durch die Messvorrichtung wie sie unten näher beschrieben ist wird eine Früherkennung von Staubabscheidungen ermöglicht. Infolgedessen kann durch gezielte Gegenmaßnahmen (insbesondere Veränderung von Prozessparametern) eine Verunreinigung des Polysiliciums sowie die Bildung von Belägen an verfahrenstechnischer Ausrüstung (z.B. Reaktorinnenwand, Filter, Wärmetauscher, Rohre) vermieden werden. Grundsätzlich können solche Gegenmaßnahmen manuell oder automatisiert erfolgen. Insbesondere lässt sich anhand einer Bestimmung (kontinuierlich oder diskontinuierlich) der Trübung die Abscheidung steuern und/oder regeln.

Bevorzugt handelt es sich bei dem Gasphasenabscheidungsreaktor um einen Siemens-Reaktor. Entsprechend handelt es sich bei dem erhitzten Trägerkörper vorzugsweise um zwei Dünnstäbe aus Silicium, die über eine Brücke aus Silicium zu einem Stabpaar verbunden sind, wobei die beiden freien Enden des Stabpaares mit Elektroden am Reaktorboden verbunden sind. Das Erhitzen des Trägerkörpers erfolgt üblicherweise also durch Stromdurchgang (Joulesche Wärme). Der Durchmesser des Trägerkörpers nimmt im Verlauf der Abscheidung durch das abgeschiedene Silicium zu. Generell ist die Anzahl der im Reaktionsraum angeordneten Siliciumstäbe bzw. Siliciumstabpaare für die Ausführung des erfindungsgemäßen Verfahrens unerheblich. Insbesondre handelt es sich bei dem Gasphasenabscheidungsreaktor um einen Siemens-Reaktor wie er einleitend und beispielsweise in der EP 2 662 335 A1 beschrieben ist.

Typische Beispiele für die Anzahl von Siliciumstäben in einem Reaktor sind 36 (18 Stabpaare), 48 (24 Stabpaare), 54 (27 Stabpaare), 72 (36 Stabpaare) oder sogar 96 (48 Stabpaare). Die Siliciumstäbe können zu jedem Zeitpunkt der Abscheidung in guter Näherung als zylinderförmig beschrieben werden. Diese Näherung ist generell unabhängig davon, ob die Dünnstäbe zylindrisch oder bspw. quadratisch ausgebildet sind.

Bei dem Gasphasenabscheidungsreaktor kann es sich auch um einen Wirbelschichtreaktor zur Herstellung von Polysiliciumgranulat handeln wie er beispielsweise einleitend beschrieben ist. Bei dem erhitzten Trägerkörper kann es sich entsprechend um die fluidisierten Silicium-Keimpartikel oder um die unter Abscheidung von Silicium aus diesen heranwachsenden Granulatpartikel handeln. Die Silicium-Keimpartikel bzw. die aus diesen durch Abscheidung entstehenden Granulatpartikel sind mit einer Größe von ca. 0,5 bis 5 mm in der Regel viel größer als die sich bei einer Staubabscheidung bildenden Partikel, so dass die Detektion einer Trübung sogar in der Wirbelschicht oder zumindest in Randbereichen der Wirbelschicht möglich ist. Das Erhitzen der Trägerkörper erfolgt hier üblicherweise durch eine Heizvorrichtung außerhalb des Reaktionsraums. Ferner kann mit einem in den Reaktionsraum eingebrachten Heizfinger geheizt werden.

Gemäß einer bevorzugten Ausführungsform umfasst die Messvorrichtung zur Bestimmung der Trübung im Reaktionsraum einen Streustrahlungsdetektor und/oder Extinktionsdetektor. Neben dem Streustrahlungs- und/oder Extinktionsdetektor kann die Messvorrichtung zumindest eine externe Quelle elektromagnetischer Strahlung, insbesondere Lichtquelle und/oder Laser, umfassen, die vorzugsweise außerhalb des Reaktors, beispielweise vor einem Sichtfenster, angeordnet ist. Unter "externer Quelle" soll verstanden werden, dass nicht ausschließlich die vom erhitzten Trägerkörper emittierte elektromagnetische Strahlung detektiert wird. Der Streustrahlungs- und/oder Extinktionsdetektor detektiert also insbesondere die von der externen Quelle stammende und ggf. gestreute und abgeschwächte elektromagnetische Strahlung nach einer Messstrecke. Die Messstrecke entspricht dabei dem Abstand zwischen externer Quelle und Detektor. Die externe Quelle sendet vorzugsweise Strahlung mit Wellenlängen oder einer Wellenlänge aus, welche sich von den typischen Wellenlängen des Emissionsspektrums von Silicium unterscheiden. Somit ist eine Unterscheidbarkeit der Messstrahlung (der externen Quelle) von der vom erhitzten Trägerkörper ausgesandten Strahlung gegeben.

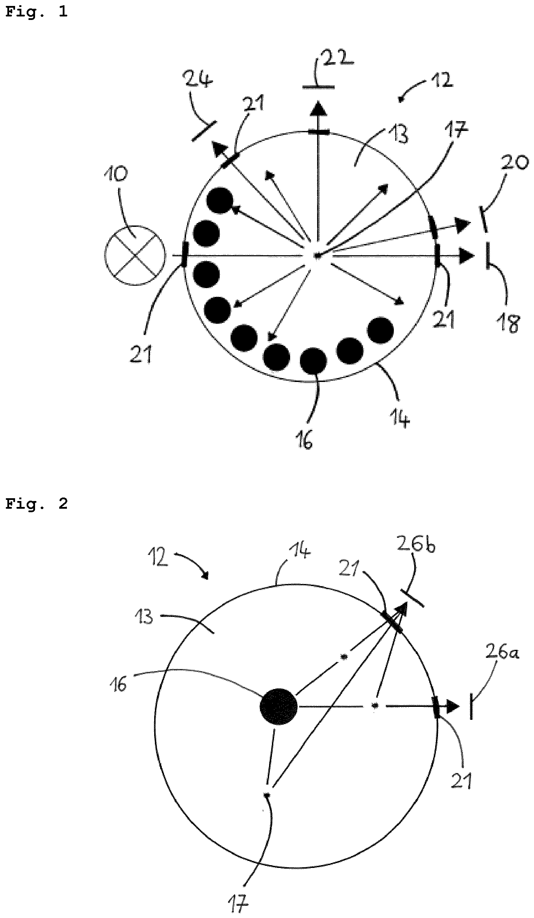

Die Detektoren sind vorzugsweise außerhalb des Reaktors, beispielweise vor einem Sichtfenster in der Reaktorwand, angeordnet. Der Extinktionsdetektor befindet sich grundsätzlich gegenüber der externen Quelle, so dass die Strahlung direkt auf den Detektor gerichtet ist. Der Streustrahlungsdetektor ist üblicherweise in einem Winkel zur ausgesendeten Strahlung angeordnet. Es können auch mehrere Streustrahlungsdetektoren in unterschiedlichen Winkeln zur Strahlung angeordnet sein. Die Messstrecke führt durch den Reaktionsraum und kann beispielsweise dem Innendurchmesser des Reaktionsraums entsprechen. Vorzugsweise handelt es sich bei der Messvorrichtung um eine Kombination aus Streustrahlungs- und Extinktionsdetektor. Eine typische Anordnung einer Messvorrichtung mit Streustrahlungs- und Extinktionsdetektor ist in der Figur 1 dargestellt.

Grundsätzlich kann zur Bestimmung der Trübung auf eine externe bzw. zusätzliche Quelle für elektromagnetische Strahlung verzichtet werden, da der erhitzte Trägerkörper selbst eine Quelle elektromagnetischer Strahlung (Wellenlängenbereich von ca. 100 bis 2000 nm) darstellt. Diese Strahlung kann mit einem Detektor, der prinzipiell auch als Extinktions- oder Streustrahlungssensor geeignet ist, während der Abscheidung detektiert werden. Bei einer Staubabscheidung wird die vom Trägerkörper emittierte Strahlung sowohl durch Absorption als auch durch Streuung geschwächt. Anhand einer Schwächung der durch den Trägerkörper ausgesandten Strahlung kann so eine Staubabscheidung erkannt werden. Eine typische Anordnung einer Messvorrichtung ohne externe Quelle für elektromagnetische Strahlung ist in der Figur 2 dargestellt.

Die Messvorrichtung kann eine optische Kamera umfassen. Insbesondere kann es sich bei der Messvorrichtung um eine optische Kamera handeln. Beispielsweise kann die optische Kamera ein Strahlungssensor-Array mit einem nachgeschalteten bildgebenden Verfahren umfassen. Die Trübung wird dabei als eine Änderung in der Qualität der mit der Kamera erzeugten Bilder bestimmt. Alternativ oder zusätzlich kann die Trübung auch als eine Änderung von Stellgrößen zur Einstellung einer optimalen Bildqualität bestimmt werden. Da es sich bei einer Kamera grundsätzlich auch um einen Detektor von elektromagnetischer Strahlung handelt kann auch auf die Ausführungen in Verbindung mit der Figur 2 verwiesen werden.

Bei der Kamera kann es sich beispielsweise um eine SchwarzWeiß-Kamera oder Farbkamera handeln. Vorzugsweise handelt es sich um eine Digitalkamera.

Die Änderung in der Qualität der mit der Kamera erzeugten Bilder kann sich beispielsweise in einer Änderung von Bildschärfe, Auflösung, Kontrast, Farbverteilung und/oder Grauwerten wiederspiegeln. Zur Auswertung solcher Änderungen wird vorzugsweise eine Bildverarbeitungssoftware herangezogen.

Bei einer Staubabscheidung ist üblicherweise zu beobachten, dass das Reaktorinnere trüber und dunkler wird (Vergrauung des Bildes). So werden beispielsweise die Rand- und Oberflächenkonturen von Siliciumstäben als Trägerkörper unscharf. Derartige Veränderungen des Kamerabildes lassen sich z.B. mittels einer Bild-Pixel-Software erkennen und bewerten. Grundsätzlich kann jedem Pixel beispielsweise in Abhängigkeit der Strahlungsintensität ein numerischer Wert zugeordnet werden. Vergleicht man die diese Werte mit vorangegangenen Werten oder mit einem Normal, lassen sich Rückschlüsse auf die Trübung ziehen. Liegt z.B. keine Trübung vor, ist der Werte-Gradient an der Kante eines Siliciumstabs steil. Bei Trübung flacht der Gradient ab und der gesamte Wertesprung ist in der Höhe reduziert. Generell reduzieren sich die Werte bei Trübung, weil die Intensität der auf dem Sensor auftreffenden Strahlung infolge der Trübung nachlässt.

Ferner kann aus zwei nacheinander aufgenommenen Bildern eine Grauwertdifferenz ermittelt werden. Übersteigt der ermittelte Wert einen bestimmten Schwellenwert, können Gegenmaßnahmen eingeleitet werden.

Bei den Stellgrößen zur Einstellung einer optimalen Bildqualität kann es sich z.B. um die Belichtungszeit, Blendenzahl und/der den ISO-Wert handeln. Beispielseise kann eine in der Kamera implementierte automatische Regelung derart eingestellt werden, dass möglichst optimale Bilder vom Reaktorinneren erzeugt werden. Entsprechend wird in Abhängigkeit der einfallenden Strahlung die Belichtungszeit angepasst. Bei einsetzender Staubabscheidung und damit einhergehender Trübung wird generell eine höhere Belichtungszeit erforderlich. Maßnahmen zum Gegensteuern können dann beim Überschreiten eines Schwellenwerts für die Belichtungszeit eingeleitet werden.

Vorteilhaft kann die Bestimmung der Trübung mit einer Kamera insbesondere beim Siemens-Verfahren sein, da für gewöhnlich ohnehin mittels einer Schwarzweiß-Kamera oder einer Wärmebildkamera die Dicke und/oder die Abstände der Siliciumstäbe zueinander und ggf. die Siliciumstab-Temperatur bestimmt werden. Hier kann beispielsweise auf die WO2019/110091A1 verwiesen werden. Umbauten oder der Einbau neuer Messvorrichtungen sind zur Trübungserkennung also grundsätzlich nicht erforderlich.

Gemäß einer weiteren Ausführungsform umfasst die Messvorrichtung einen Temperatursensor, wobei die Trübung vorzugsweise als eine Änderung der Temperatur bestimmt wird. Insbesondere handelt es sich bei der Messvorrichtung um einen Temperatursensor.

Vorzugsweise ist der Temperatursensor ausgewählt aus der Gruppe mit Pyrometer (Strahlungsthermometer), Wärmebildkamera, Thermoelement und Kombinationen daraus.

Bei Gasphasenabscheidungsreaktoren, insbesondere bei Siemens-Reaktoren, wird die Temperatur im Reaktionsraum üblicherweise standardmäßig überwacht. Beispielsweise wird beim Siemens-Verfahren die Temperatur der Trägerkörper (Siliciumstäbe) mit einem Pyrometer oder einer Wärmebildkamera gemessen und dient als wichtige Regelgröße während der Abscheidung.

Pyrometer und Wärmebildkameras verfügen über einen Detektor, der die vom Trägerkörper und ggf. dessen Umgebung ausgesandte elektromagnetische Strahlung misst. Wie auch in der Figur 2 dargestellt erfolgt die Messung für gewöhnlich von außerhalb des Reaktors. Eine auftretende Staubabscheidung und die damit einhergehende Trübung wirkt als Störgröße auf die Temperaturmessung. Die am Detektor ankommende Strahlung wird vermindert und folglich der erwartete Temperaturmessewert als zu gering verfälscht. Diese Verfälschung kann sich generell in vielen Größen eines geschlossenen Regelkreises als Folge reglungstechnischer mathematischer Zusammenhänge fortsetzen. Somit können auch diese Folgegrößen bzw. deren Abweichungen von einem Normalwert zur Erkennung einer Staubabscheidung herangezogen werden.

Die durchschnittliche Temperatur von Siliciumpartikeln (Trägerkörper) in der Reaktionszone eines Wirbelschichtreaktors kann z.B. mit einem Infrarot-Pyrometer gemessen werden wie in der EP 0 896 952 A1 beschrieben ist.

Insbesondere kann es sich bei der Messvorrichtung um eine Kombination aus einer optischen Kamera und einem Temperatursensor handeln. Beispielsweise kann es sich um eine Schwarzweiß-Kamera zur Beobachtung des Reaktionsraumes und um ein Pyrometer oder eine Wärmebildkamera zur Bestimmung der Trägerkörpertemperatur handeln.

Vorzugsweise wird die Trübung an wenigstens zwei verschiedenen Messpunkten bestimmt. Dies kann beispielsweise durch Messvorrichtungen an unterschiedlichen Positionen es Reaktors realisiert werden. Beispielsweise könnte für den Fall eines Wirbelschichtreaktors eine Kamera auf einen Bereich des Reaktionsraums oberhalb der Wirbelschicht und eine auf einen Bereich unterhalb der Wirbelschicht gerichtet sein. Ebenso könnten für den Fall eines Siemens-Reaktors Wärmebildkameras herangezogen werden, welche Stabtemperaturen an unterschiedlichen Siliciumstäben messen. Generell ist eine Bestimmung der Trübung an verschiedenen Orten des Reaktionsraums allerdings nicht zwingend erforderlich, da sich die Partikel bei einer Staubabscheidung grundsätzlich gleichmäßig im Reaktionsraum verteilen.

Die Trübung kann kontinuierlich während der gesamten Abscheidung oder diskontinuierlich zu verschiedenen Zeitpunkten, vorzugsweise in gleichen Zeitintervallen, der Abscheidung bestimmt werden. Vorzugsweise erfolgt die Bestimmung der Trübung kontinuierlich, um ein schnelles Eingreifen und eine besonders präzise Steuerung der Abscheidung zu ermöglichen.

Als weitere Sensoren, die generell eine Trübung als Änderung von auf den Sensor auftreffender elektromagnetischer Strahlung detektieren können, sind zu nennen: Halbleitersensor, z.B. CCD (Charge-Coupled Device)-Sensor und CMOS-Sensor (aktiver Pixelsensor), und Fotowiderstand (Light Dependent Resistor).

Vorzugsweise wird beim Überschreiten eines Schwellenwerts der Trübung die Abscheidung unterbrochen oder beendet. Eine Beendigung kann z.B. dann in Betracht kommen, wenn aufgrund einer besonders stark ausgeprägten Staubabscheidung ein hoher Verunreinigungsgrad zu erwarten ist, der auch durch Gegenmaßnahmen nicht zu beseitigen ist.

Bevorzugt erfolgt allerdings eine Regelung oder Steuerung der Abscheidung in Abhängigkeit der gemessenen Trübung. Dies geschieht insbesondere durch Variation von typischen Parametern der Abscheidung.

Vorzugsweise wird bei Überschreiten oder Unterschreiten eines Schwellenwerts der Trübung zumindest ein Prozess-Parameter ausgewählt aus der Gruppe mit Reaktordruck, Trägerkörpertemperatur, Volumenstrom (Durchfluss) und Reaktionsgaszusammensetzung variiert.

Die Trägerkörpertemperatur kann z.B. über einen geschlossenen Regelkreis über den Wärmeeintrag in den Trägerkörper verändert werden. Der Wärmeeintrag kann wiederum über elektrischen Strom, welcher kontaktbehaftet über Elektroden oder berührungslos über elektromagnetische Induktion in den Trägerkörper eingetragen und zu Wärmeenergie umgewandelt wird, erfolgen. Ferner kann der Wärmeeintrag weitestgehend berührungslos über elektromagnetische Strahlung, insbesondere mittels Wärmestrahler, in den Trägerkörper eingebracht werden. Die Leistungsverstellung der vorgenannten Energiewandler erfolgt üblicherweise mit einem dem Energiewandler vorgeschalteten Strom- oder Frequenzumrichter und für gewöhnlich auch mit einem Stromrichtertransformator.

Die Regelung des Volumenstroms des Reaktionsgases oder einzelner Komponenten des Reaktionsgases kann beispielsweise über den geschlossenen Regelkreis einer Durchflussmesseinrichtung, einem Regler und einer Regelarmatur in der Zuführungsleitung zum Reaktor erfolgen. Der Volumenstrom wird üblicherweise vor Eintritt des Reaktionsgases in den Reaktor gemessen, beispielsweise nach DIN EN 1343.

Die Reaktionsgaszusammensetzung kann z.B. über den Durchflussregelkreis einer weiteren Komponente des Reaktionsgases zum Reaktor (z.B. TCS, H₂) verändert werden.

Der Reaktordruck kann beispielsweise über den geschlossenen Regelkreis einer Druckmessung, einem Regler und einer im Abgasstrang des Reaktors installierten Regelarmatur variiert werden.

Für gewöhnlich werden die genannten Parameter stets an einem Prozessleitstand angezeigt und ggf. aufgezeichnet.

Vorzugsweise wird die Abscheidung derart gesteuert und/oder geregelt, dass die Trübung während der Abscheidung im Wesentlichen konstant, insbesondere im Wesentlichen gleich Null ist oder zumindest einen Wert nahe Null annimmt. Grundsätzlich ist es wünschenswert, dass es zu keinerlei Trübung bedingt durch eine Staubascheidung kommt. Allerdings kann es von den Qualitätsanforderung an das abzuscheidende Polysilicium abhängen, ob eine Staubabscheidung bis zu einem gewissen Grad toleriert werden kann, um Betriebskosten zu senken.

Unter "im Wesentlichen" soll insbesondere verstanden werden, dass temporär geringe Abweichungen vom Sollwert auftreten können. Gründe hierfür können beispielsweise sein: Regelgrößen-Schwankungen der dem Reaktor vor- und nachgelagerten verfahrenstechnischen Einheiten, Regelgrößenschwankungen des Reaktors selbst, Anstieg des Anteils an unerwünschten Silankomponenten im Reaktionsgas.

Die Messvorrichtung ist bevorzugt mit einem Verfahrensleitstand gekoppelt. Die Steuerung der Abscheidung kann ferner automatisch in einem geschlossenen Regelkreis erfolgen.

Ein weiterer Aspekt der Erfindung betrifft einen Gasphasenabscheidungsreaktor zur Durchführung des erfindungsgemäßen Verfahrens mit einer Messvorrichtung zur Bestimmung der Trübung innerhalb des Reaktionsraums während der Abscheidung. Die Messvorrichtung umfasst dabei einen Streustrahlungsdetektor und/oder Extinktionsdetektor mit zumindest einer externen Quelle für elektromagnetische Strahlung. Die Wechselwirkung der durch die Quelle ausgesendeten Strahlung wird nach einer Messstrecke durch den Reaktionsraum mit Hilfe der Detektoren ermittelt.

Vorzugsweise handelt es sich bei dem Gasphasenabscheidungsreaktor um einen Siemens-Reaktor oder einen Wirbelbettreaktor. Hinsichtlich weiterer Ausführungsformen des Reaktors kann auf die vorherigen Ausführungen und die Beispiele Bezug genommen werden.
- **Fig. 1**: zeigt den Querschnitt eines Gasphasenabscheidungsreaktors zur Ausführung des erfindungsgemäßen Verfahrens.
- Fig. 2: zeigt den Querschnitt eines Gasphasenabscheidungsreaktors zur Ausführung des erfindungsgemäßen Verfahrens.
- Fig. 3: zeigt den Verlauf von Temperatur und Belichtungszeit bei einer Staubabscheidung.

Die Figur 1 zeigt den Querschnitt eines erfindungsgemäßen Gasphasenabscheidungsreaktors 12 in dessen Reaktionsraum 13, der von einer Reaktorwand 14 begrenzt wird, Trägerkörper 16 angeordnet sind. Bei den Trägerkörpern 16 handelt es sich um Siliciumstäbe, wobei aus Gründen der Übersichtlichkeit nur ein Teil der Stäbe dargestellt ist.

Zur Trübungsmessung im Reaktionsraum 13 ist der Reaktor 12 mit einer Messvorrichtung ausgestattet. Diese umfasst eine vor einem Sichtfenster 21 angeordnete separate Quelle für elektromagnetische Strahlung, hier eine Lichtquelle 10 (Laser mit 515 nm oder 488 nm). Ferner umfasst sie einen gegenüber der Lichtquelle 10 ebenfalls vor einem Sichtfenster 21 (aus Borsilikat- oder Quarzglas) angeordneten Extinktionsdetektor 18. Darüber hinaus sind in verschiedenen Winkeln zur Strahlungsrichtung der Lichtquelle 10 jeweils vor einem Sichtfenster 21 Streulichtdetektoren 20, 22, 24 (entsprechende CCD-Sensorarrays) positioniert. Die Streulichtdetektoren 20, 22, 24 müssen sich nicht notwendigerweise auf derselben Höhe wie die Quelle 10 befinden.

Bei einer Staubabscheidung beginnen sich im Reaktionsraum 13 Partikel 17 zu bilden. Einerseits schwächen diese durch Absorption das von der Quelle 10 ausgestrahlte Licht. Dies wird durch den Extinktionsdetektor 18 registriert. Andererseits kommt es zu einer zunehmenden Lichtstreuung an den Partikeln 17, was von den Streulichtdetektoren 20, 22, 24 erfasst werden kann. Üblicherweise werden die Messwerte von einem Prozessleitstand erfasst und ggf. zusätzlich mit Referenz- bzw. Normalwerten abgeglichen. Auf Basis dieser Messwerte könne dann Gegenmaßnahmen ergriffen werden. Da sich bei einer Staubabscheidung die Partikel 17 für gewöhnlich gleichmäßig im Reaktionsraum 13 verteilen, ist es grundsätzlich unerheblich, auf welcher Höhe die Detektoren 20, 22, 24 und die Quelle 10 angebracht sind. Vorzugsweise sind sie auf Höhe des mittleren Drittels der Siliciumstabhöhe angebracht.

Die Figur 2 zeigt einen Gasphasenabscheidungsreaktor 12 im Querschnitt, wobei bezüglich der wesentlichen Elemente auf die Figur 1 verwiesen werden kann. Aus Gründen der Übersicht ist nur ein erhitzter Siliciumstab als Strahlung emittierender Trägerköper 16 dargestellt. In dieser Ausführungsform sind zwei Detektoren 26a, 26b (z.B. Photodioden und/oder Photomultiplier) jeweils vor einem Sichtfenster 21 in der Reaktorwand 14 angeordnet. Die Pfeile deuten sowohl an den durch Staubabscheidung gebildeten Partikeln 17 gestreutes Licht als auch durch Absorption geschwächtes Licht an. Auf den Detektor 26a fällt hier schematisch nur durch Absorption geschwächtes Licht, während auf den Detektor 26b sowohl Streulicht als auch durch Absorption geschwächtes Licht trifft. Die Trübung wird also als eine Änderung der auf den Sensor auftreffenden Strahlung bestimmt.

### Beispiel:

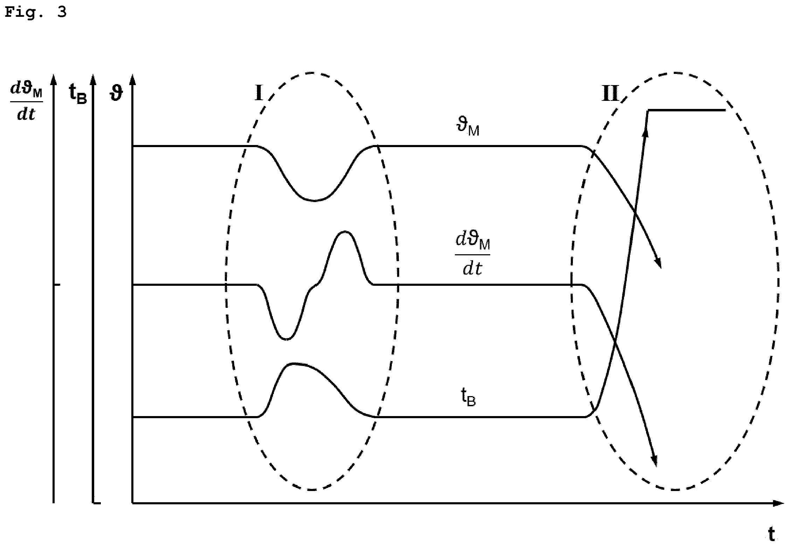

In der Figur 3 ist in einem Diagramm der Verlauf der gemessenen Trägerkörpertemperatur *ϑ_{M}*, deren erster Ableitung nach der Zeit *t* und der Belichtungszeit *t_{B}* einer vor dem Sichtfenster eines Siemens-Reaktors angebrachten Schwarzweiß-Kamera gegen *t* (Abscheidedauer) aufgetragen. Der dargestellte Verlauf beginnt bei einer Abscheidedauer von 60 Stunden.

Der Siemens-Reaktor war mit 24 Stabpaaren bestückt, wobei die Art des Reaktors für die Ausführung der Erfindung grundsätzlich unerheblich ist. Die Bestimmung von *ϑ_{M}*, erfolgte an einem Polysiliciumstab (auf Höhe der Stabmitte zwischen Brücke und Elektrode) mit einem vor einem Sichtfenster angeordneten Pyrometer. Die Daten des Pyrometers wurden an einen Prozessleitstand übermittelt und aufgezeichnet. Die Schwarzweiß-Kamera war mit einem CMOS-Sensor ausgestattet und war ebenfalls etwa auf Höhe der Stabmitte in den Reaktionsraum gerichtet. Die Kamera erzeugte kontinuierlich ein Bild, das an eine Verarbeitungssoftware des Prozessleitstands übermittelt wird. Durch die Software erfolgte eine automatische Angleichung der Belichtungszeit *t_{B}* bei Verdunklung oder Aufhellung.

Nach einer Abscheidedauer von 60 Stunden verlief *ϑ_{M}* zunächst konstant bei etwa 1040°C. Nach ca. 5 Minuten kam es zu einem (scheinbaren) Abfall von *ϑ_{M}* um ca. 12°C, wobei sich *ϑ_{M}* nach etwa 4 Minuten auf den vorherigen Wert einstellte. Dass es sich bei dieser Unregelmäßigkeit um eine kurzzeitige Staubabscheidung handelte, konnte durch den Anstieg (von 360 auf 450 ps) und Abfall von *t_{B}* im selben Zeitfenster (Bereich innerhalb der gestrichelten Linie I) bestätigt werden, da eine Staubabscheidung zu einer Verdunklung des Bildes führt. Grundsätzlich ist der Verlauf von *ϑ_{M}* bei einer Staubabscheidung dadurch gekennzeichnet, dass sich der Messwert schneller ändert als dies durch die Wärmekapazität der Siliciumstäbe oder die Regelstrecke des Temperaturregelkreise überhaupt möglich wäre. Nach einer erneuten Phase der Konstanz (ca. 10 Minuten) kam es zu einem signifikanten Abfall von *ϑ_{M}* in Kombination mit einem steilen Anstieg von *t_{B}*. Bei diesem abnormalen Kurvenverlauf handelte es sich um eine vollständige Staubabscheidung.

Bei einer temporären Staubabscheidung kann sich der Prozess dadurch erholen, dass durch die Gasströmung mehr Partikel über das Abgas aus dem Rektor abgeführt als neue gebildet werden. Wenn sich jedoch zu viele Staubpartikel im Reaktor bilden, können diese nicht mehr durch die Gasströmung aus dem Reaktor geführt werden. Bei weiterhin unveränderter Reaktionsgaszufuhr und unveränderter oder sogar zunehmender Wärmezufuhr werden mehr Staubpartikel abgeschieden als ausgeblasen und es kommt zu einer anhaltenden Verdunklung der Reaktoratmosphäre.

Aus den ermittelten Unregelmäßigkeiten bei *ϑ_{M}* und *t_{B}* kann insbesondere auch eine Trübungskennzahl ermittelt werden, in deren Abhängigkeit dann Gegenmaßnahmen (manuell oder automatisch) zum Verhindern der Staubabscheidung getroffen werden.

## Patentansprüche

1. Verfahren zur Herstellung von polykristallinem Silicium, umfassend Einleiten eines Reaktionsgases, das neben Wasserstoff Silan und/oder zumindest ein Halogensilan enthält, in einen Reaktionsraum eines Gasphasenabscheidungsreaktors, wobei der Reaktionsraum mindestens einen erhitzten Trägerkörper umfasst, auf welchem durch Abscheidung Silicium unter Bildung des polykristallinen Siliciums abgeschieden wird, wobei zur Erkennung von Staubabscheidungen mit zumindest einer Messvorrichtung die Trübung innerhalb des Reaktionsraums während der Abscheidung bestimmt wird.

2. Verfahren nach Anspruch 1, **dadurch gekennzeichnet, dass** die Messvorrichtung einen Streustrahlungsdetektor und/oder Extinktionsdetektor umfasst.

3. Verfahren nach Anspruch 2, **dadurch gekennzeichnet, dass** die Messvorrichtung ferner eine externe Quelle für elektromagnetische Strahlung umfasst.

4. Verfahren nach einem der vorhergehenden Ansprüche, **dadurch gekennzeichnet, dass** die Messvorrichtung eine optische Kamera umfasst, wobei die Trübung als eine Änderung in der Qualität der mit der Kamera erzeugten Bilder bestimmt wird.

5. Verfahren nach einem der vorhergehenden Ansprüche, **dadurch gekennzeichnet, dass** die Messvorrichtung einen Temperatursensor umfasst, wobei die Trübung als eine Änderung der Temperatur bestimmt wird.

6. Verfahren nach Anspruch 5, **dadurch gekennzeichnet, dass** der Temperatursensor ausgewählt ist aus der Gruppe mit Pyrometer, Wärmebildkamera, Thermoelement und Kombinationen daraus.

7. Verfahren nach Anspruch 1, **dadurch gekennzeichnet, dass** es sich bei der Messvorrichtung um eine Kombination aus optischer Kamera, und Temperatursensor handelt.

8. Verfahren nach einem der vorhergehenden Ansprüche, **dadurch gekennzeichnet, dass** die Trübung an wenigstens zwei verschiedenen Messpunkten bestimmt wird.

9. Verfahren nach einem der vorhergehenden Ansprüche, **dadurch gekennzeichnet, dass** die Trübung kontinuierlich während der gesamten Abscheidung oder diskontinuierlich zu verschiedenen Zeitpunkten der Abscheidung bestimmt wird.

10. Verfahren nach einem der vorhergehenden Ansprüche, **dadurch gekennzeichnet, dass** beim Überschreiten eines Schwellenwerts der Trübung die Abscheidung unterbrochen oder beendet wird.

11. Verfahren nach einem der Ansprüche 1 bis 10, **dadurch gekennzeichnet, dass** bei Überschreiten oder Unterschreiten eines Schwellenwerts der Trübung zumindest ein Parameter ausgewählt aus der Gruppe mit Reaktordruck, Trägerkörpertemperatur, Reaktionsgaszusammensetzung und Volumenstrom variiert wird.

12. Verfahren nach einem der vorhergehenden Ansprüche, **dadurch gekennzeichnet, dass** die Abscheidung derart gesteuert und/oder geregelt wird, dass die Trübung während der Abscheidung im Wesentlichen konstant ist.

13. Verfahren nach einem der vorhergehenden Ansprüche, **dadurch gekennzeichnet, dass** es sich bei dem Gasphasenabscheidungsreaktor um einen Siemens-Reaktor handelt.

14. Verfahren nach einem oder mehreren der Ansprüche 1 bis 12, **dadurch gekennzeichnet, dass** es sich bei dem Gasphasenabscheidungsreaktor um einen Wirbelbettreaktor handelt.

15. Gasphasenabscheidungsreaktor zur Durchführung des Verfahrens nach einem oder mehreren der vorhergehenden Ansprüche, umfassend eine Messvorrichtung zur Bestimmung der Trübung innerhalb des Reaktionsraums während der Abscheidung, wobei die Messvorrichtung einen Streulichtdetektor und/oder Extinktionsdetektor mit einer externen Quelle für elektromagnetische Strahlung umfasst.

## Claims

1. Process for producing polycrystalline silicon comprising introducing a reaction gas containing silane and/or at least one halosilane as well as hydrogen into a reaction space of a gas phase deposition reactor, wherein the reaction space comprises at least one heated support body upon which by deposition silicon is deposited to form the polycrystalline silicon, wherein for detection of dust depositions at least one measuring apparatus is used to determine the haze inside the reaction space during the deposition.

2. Process according to Claim 1, **characterized in that** the measuring apparatus comprises a scattered radiation detector and/or extinction detector.

3. Process according to Claim 2, **characterized in that** the measuring apparatus further comprises an external source of electromagnetic radiation.

4. Process according to any of the preceding claims, **characterized in that** the measuring apparatus comprises an optical camera, wherein the haze is determined as a change in the quality of the images produced with the camera.

5. Process according to any of the preceding claims, **characterized in that** the measuring apparatus comprises a temperature sensor, wherein the haze is determined as a change in temperature.

6. Process according to Claim 5, **characterized in that** the temperature sensor is selected from the group comprising pyrometer, thermal imaging camera, thermocouple and combinations thereof.

7. Process according to Claim 1, **characterized in that** the measuring apparatus is a combination of optical camera and temperature sensor.

8. Process according to any of the preceding claims, **characterized in that** the haze is determined at at least two different points of measurement.

9. Process according to any of the preceding claims, **characterized in that** the haze is determined continuously during the entire deposition or discontinuously at various times during the deposition.

10. Process according to any of the preceding claims, **characterized in that** the deposition is interrupted or terminated upon exceeding a threshold value of haze.

11. Process according to any of Claims 1 to 10, **characterized in that** upon exceeding or falling below a threshold value of haze at least one parameter selected from the group comprising reactor pressure, support body temperature, reaction gas composition and volume flow is varied.

12. Process according to any of the preceding claims, **characterized in that** the deposition is controlled such that during deposition the haze is substantially constant.

13. Process according to any of the preceding claims, **characterized in that** the gas phase deposition reactor is a Siemens reactor.

14. Process according to one or more of Claims 1 to 12, **characterized in that** the gas phase deposition reactor is a fluidized bed reactor.

15. Gas phase deposition reactor for performing the process according to one or more of the preceding claims, comprising a measuring apparatus for determining the haze inside the reaction space during deposition, wherein the measuring apparatus comprises a scattered light detector and/or extinction detector having an external source of electromagnetic radiation.

## Revendications

1. Procédé de préparation de silicium polycristallin, comprenant l'introduction d'un gaz de réaction, qui, outre de l'hydrogène, contient un silane et/ou au moins un halogénosilane, dans un espace de réaction d'un réacteur de dépôt en phase gazeuse, l'espace de réaction comprenant au moins un corps de support chauffé, sur lequel du silicium est déposé par dépôt avec formation du silicium polycristallin, dans lequel, afin de détecter des dépôts de poussières avec au moins un dispositif de mesure, la turbidité à l'intérieur de l'espace de réaction est déterminée pendant le dépôt.

2. Procédé selon la revendication 1, **caractérisé en ce que** le dispositif de mesure comprend un détecteur de rayonnement diffusé et/ou un détecteur d'extinction.

3. Procédé selon la revendication 2, **caractérisé en ce que** le dispositif de mesure comprend en outre une source externe pour un rayonnement électromagnétique.

4. Procédé selon l'une quelconque des revendications précédentes, **caractérisé en ce que** le dispositif de mesure comprend une caméra optique, la turbidité étant déterminée comme un changement de la qualité des images générées par la caméra.

5. Procédé selon l'une quelconque des revendications précédentes, **caractérisé en ce que** le dispositif de mesure comprend un capteur de température, la turbidité étant déterminée comme un changement de la température.

6. Procédé selon la revendication 5, **caractérisé en ce que** le capteur de température est choisi dans le groupe comprenant un pyromètre, une caméra thermique, un thermocouple et des combinaisons correspondantes.

7. Procédé selon la revendication 1, **caractérisé en ce que** le dispositif de mesure est une combinaison d'une caméra optique et d'un capteur de température.

8. Procédé selon l'une quelconque des revendications précédentes, **caractérisé en ce que** la turbidité est déterminée au niveau d'au moins deux points de mesure différents.

9. Procédé selon l'une quelconque des revendications précédentes, **caractérisé en ce que** la turbidité est déterminée de manière continue pendant la totalité du dépôt ou de manière discontinue à différents moments du dépôt.

10. Procédé selon l'une quelconque des revendications précédentes, **caractérisé en ce que** lors d'un dépassement d'une valeur seuil de la turbidité, le dépôt est interrompu ou terminé.

11. Procédé selon l'une quelconque des revendications 1 à 10, **caractérisé en ce que** lors d'un dépassement ou d'une chute en dessous d'une valeur seuil de la turbidité, au moins un paramètre choisi dans le groupe comprenant la pression de réacteur, la température du corps de support, la composition du gaz de réaction et le débit volumétrique est modifié.

12. Procédé selon l'une quelconque des revendications précédentes, **caractérisé en ce que** le dépôt est contrôlé et/ou régulé de telle manière que la turbidité soit essentiellement constante pendant le dépôt.

13. Procédé selon l'une quelconque des revendications précédentes, **caractérisé en ce que** le réacteur de dépôt en phase gazeuse est un réacteur Siemens.

14. Procédé selon l'une quelconque ou plusieurs des revendications 1 à 12, **caractérisé en ce que** le réacteur de dépôt en phase gazeuse est un réacteur à lit tourbillonnant.

15. Réacteur de dépôt en phase gazeuse pour la réalisation du procédé selon l'une quelconque ou plusieurs des revendications précédentes, comprenant un dispositif de mesure pour la détermination de la turbidité à l'intérieur de l'espace de réaction pendant le dépôt, le dispositif de mesure comprenant un détecteur de lumière diffusée et/ou un détecteur d'extinction comportant une source externe pour un rayonnement électromagnétique.
